## Europäisches Patentamt
## European Patent Office
## Office européen des brevets

(19)

(11) Numéro de publication: **0 006 381**
**B1**

(12) **FASCICULE DE BREVET EUROPEEN**

(45) Date de publication du fascicule du brevet:
**01.02.84**

(21) Numéro de dépôt: **79400373.1**

(22) Date de dépôt: **08.06.79**

(51) Int. Cl.³. **B 29 D 27/04**

(54) Dispositif de moulage d'objets en mousse plastique.

㉚ Priorité· **13.06.78 FR 7818325**

㊸ Date de publication de la demande.
**09.01.80 Bulletin 80/1**

(45) Mention de la délivrance du brevet:
**01.02.84 Bulletin 84/5**

(84) Etats contractants désignés:
**AT BE CH DE FR GB IT LU NL SE**

(56) Documents cités:
**BE - A - 719 787**
**DE - A - 1 813 298**
**DE - A - 2 118 739**
**FR - A - 2 223 169**
**GB - A - 1 324 501**
**US - A - 3 833 694**
**US - A - 3 970 732**

**Encyclopedia of polymer Science and Technology Vol. 3 et 11; Technologie des polymères par Miles: et les mousses plastiques par Dankward Homann**

(73) Titulaire: **INDUSTRIES ET TECHNIQUES D'AMEUBLEMENT Société dite:, Severac-Le-Chateau, Aveyron (FR)**

(72) Inventeur: **Contastin, André Jean, Le Moulin de Gary, F-12150 Severac-Le-Chateau (FR)**

(74) Mandataire: **Polus, Camille et al, c/o Cabinet Lavoix 2, Place d'Estienne d'Orves, F-75441 Paris Cedex 09 (FR)**

BUNDESDRUCKEREI BERLIN

## Dispositif de moulage d'objets en mousse plastique

La présente invention est relative à un dispositif de moulage d'objets en mousse plastique à partir d'un mélange de réaction liquide précurseur de la matière à former et dont une dose relativement faible est introduite dans un moule à l'intérieur duquel le mélange est amené à mousser en étant contenu par les parois du moule qui déterminent la forme définitive de l'objet.

Dans le US-A-3 970 732, on décrit un dispositif de moulage d'articles en mousse de ce genre comportant un moule réalisé à partir de deux demi-coquilles assemblables selon un plan de joint, moule dans lequel est ménagé un trou de coulée à travers lequel le mélange moussable est introduit dans le moule, la chambre de moussage de celui-ci pouvant être sélectivement raccordée à une source à dépression destinée à favoriser le moussage du mélange moussant de telle sorte que la substance moussante occupe rapidement le volume de la chambre et soit de densité uniforme.

Dans ce dispositif connu, la demi-coquille inférieure comporte une nervure délimitant avec un joint d'étanchéité périphérique une chambre annulaire raccordée par un conduit à une source à dépression. La chambre annulaire communique avec la chambre de moussage à travers un interstice de faible dimension ménagé entre les demi-coquilles, de sorte que la dépression peut être communiquée au mélange moussant.

Il s'est avéré que la durée de maintien de la dépression dans le moule pendant le moussage doit être soigneusement déterminée à partir de l'instant où le mélange précurseur est introduit dans le moule. Dans le brevet des E.U.A. précité, on prévoit à cet effet une vanne à dépression à la chambre annulaire, la commande de cette vanne n'étant, par ailleurs, pas décrite.

L'invention a pour but de fournir un dispositif perfectionné de moulage d'objets en mousse plastique de ce type dans lequel la durée de l'application de la dépression peut être déterminée automatiquement et avec précision à chaque processus de moulage exécuté dans le moule.

L'invention a donc pour objet un dispositif de moulage d'objets en mousse plastique à partir d'un mélange de réaction liquide précurseur de la mousse plastique à former, ce dispositif comportant au moins un moule réalisé à partir de deux demi-coquilles assemblables selon un plan de joint pour délimiter une cavité de moussage, moule dans lequel est ménagé un trou de coulée à travers lequel le mélange précurseur est introduit dans cette cavité, celle-ci étant raccordée sélectivement à une source à dépression par l'intermédiaire d'un organe de réglage, ce dispositif étant caractérisé en ce que le trou de coulée est ménagé à la partie supérieure du moule et peut être obturé par un bouchon amovible comportant un passage qui est relié à ladite source à dépression et qui peut communiquer avec ladite chambre de moussage à travers une soupape commandée constituant ledit organe de réglage et en ce que des moyens de commande sont prévus pour modifier la position de la soupape en fonction de l'avancement de l'expansion de la mousse à l'intérieur de ladite chambre de moussage.

Il résulte de ces caractéristiques que l'application de la dépression à la chambre du moule en vue de promouvoir le moussage s'étend sur une durée qui prend fin lorsque la matière moussante atteint une certaine hauteur qui est fixée une fois pour toutes et qui est donc la même d'un cycle de moulage à l'autre.

L'invention est exposée ci-après plus en détail à l'aide de dessins représentant seulement un mode d'éxécution, sur lesquels:

— la Fig. 1 est une vue en élévation et en coupe partielle d'un dispositif selon l'invention pour la fabrication d'objets en mousse;

— la Fig. 2 est une vue en élévation avec arrachement partiel du dispositif de la Fig. 1, prise selon la ligne 2-2 de cette Fig.;

— la Fig. 3 est une vue en coupe, à plus grande échelle, d'un détail du dispositif suivant l'invention.

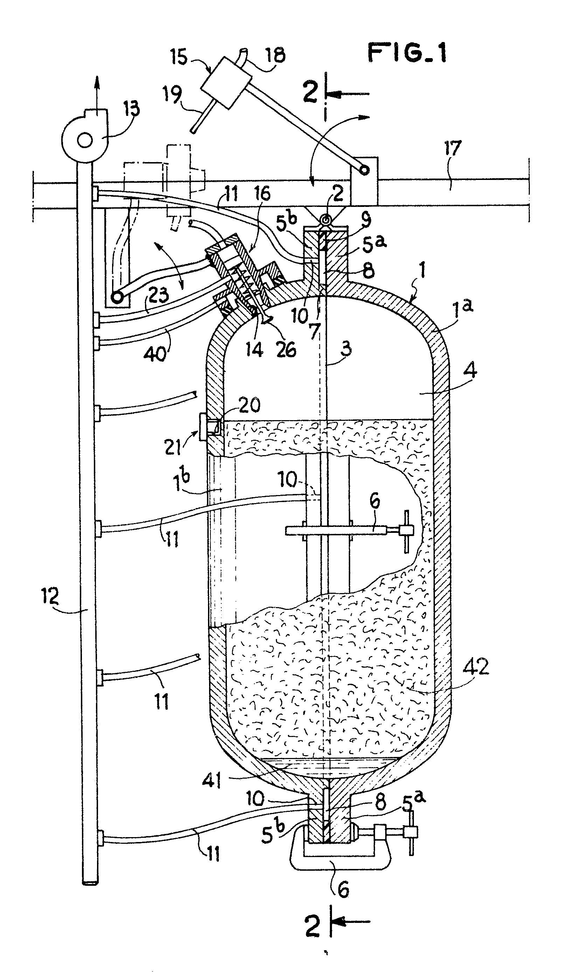

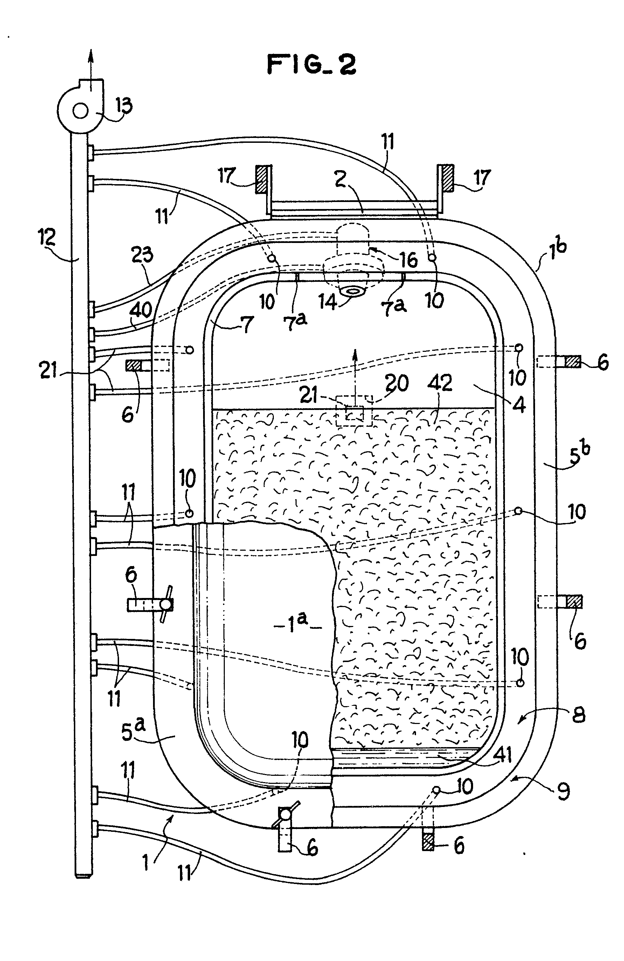

Selon le mode de réalisation représenté aux Fig. 1 et 2, le dispositif de moulage conforme à l'invention comporte un moule 1 comportant deux demi-coquilles 1a et 1b qui sont articulées l'une sur l'autre autour d'un axe horizontal 2 et qui définissent un plan de joint vertical 3.

Dans l'exemple représenté, le moule délimite une chambre de moussage 4 dont la paroi définit par exemple la forme d'une assise de siège, cette forme n'étant bien entendu pas limitative.

Chaque demi-coquille comporte une bride périphérique 5a, 5b et les brides sont maintenues, lors de la fermeture du moule, par des dispositifs de verrouillage 6 d'un type quelconque connu.

On voit que la bride 5b de la demi-coquille 1b n'affleure pas le bord de celle-ci, mais qu'au contraire, elle est prévue légèrement en retrait de façon à ménager une nervure périphérique 7 sur le contour intérieur du bord de cette demi-coquille, la face de cette nervure 7 étant destinée à s'appliquer contre la face en regard de l'autre demi-coquille. Grâce à cette disposition, les deux brides 5a et 5b délimitent une chambre à dépression annulaire 8 qui à l'extérieur est bordée par une garniture d'étanchéité 9, par exemple en caoutchouc comprimée par les deux brides 5a et 5b lorsque le moule 1 est fermé. Par ailleurs, la bride 5b comporte plusieurs orifices 10 qui par des tuyaux souples 11 sont raccordés à une canalisation à dépression 12, elle-même raccordée à une pompe à succion 13. Dans la partie haute de la demi-coquille 1a, la nervure 7 est interrompue à plusieurs endroits par des entailles formant des évents 7a qui mettent en communication les chambres 4 et 8.

La demi-coquille 1b comporte en outre un orifice de coulée 14 de forme tronconique et s'évasant vers l'extérieur et prévu à la partie supérieure du moule 1. Dans cet orifice de coulée peut être placé alternativement, d'une part, une tête de coulée 15 et d'autre part, comme représenté, un bouchon d'obturation 16.

La tête de coulée 15 est montée articulée sur un bâti fixe 17 et connectée par un tuyau 18 à un dispositif d'alimentation (non représenté) dans lequel sont préparées les composantes du précurseur de matière synthétique destinées à la formation de l'objet. Un dispositif moteur (vérin ou autre non représenté) permet de placer la tête de coulée dans l'une ou l'autre de ses positions. La tête de coulée comporte un tube injecteur 19 destiné à être introduit dans le trou 14.

Le bouchon 16 est également monté articulé sur le bâti fixe 17 et peut donc occuper une position effacée (représentée en pointillés) et une position active (représentée sur la Fig. 1).

Une cavité 20 est ménagée à l'extérieur dans la paroi de la demi-coquille 1b. Le fond de cette cavité est séparée de la chambre de moussage 4 par une mince cloison contre laquelle est placée un détecteur de niveau 21 délivrant un signal lorsque la mousse atteint le niveau correspondant dans la moule 1.

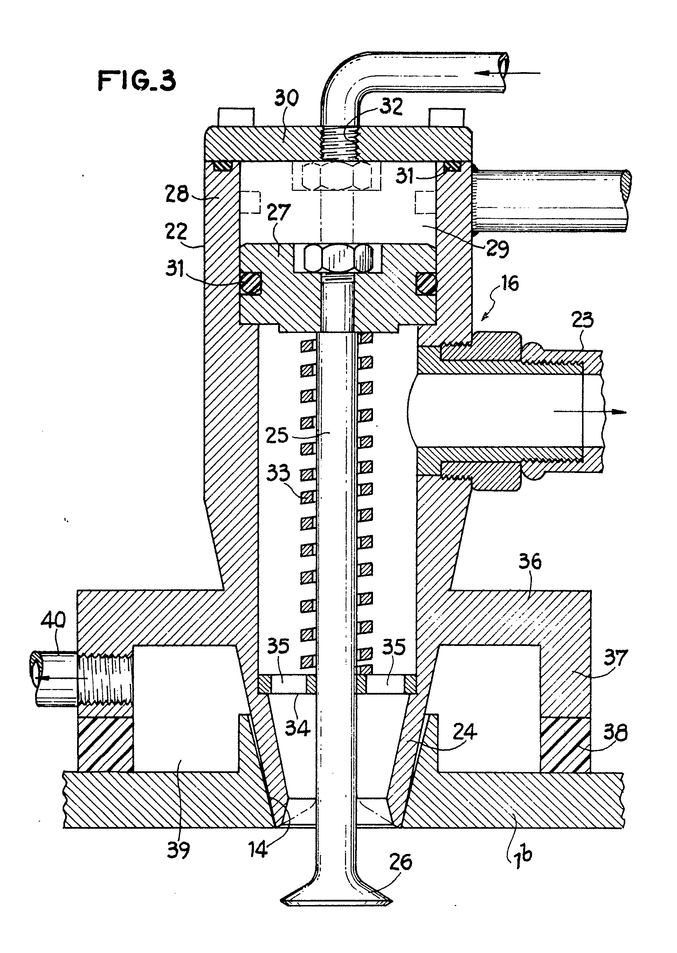

La Fig. 3 représente à plus grande échelle, le bouchon d'obturation 16. Celui-ci comporte un élément tubulaire 22 qui est relié par un conduit 23 à la canalisation 12 et dont une extrémité tronconique 24 peut être engagée avec étanchéité dans l'orifice de coulée 14 du moule 1.

A l'intérieur de l'élément tubulaire 22 est montée, coaxialement à celui-ci, une tige 25 dont une extrémité élargie 26 forme obturateur de soupape qui, en position d'ouverture, est située à l'extérieur de l'élément tubulaire 22 et en position de fermeture est destinée à venir en appui sur l'extrémité 24 qui forme donc siège de soupape.

L'autre extrémité à la tige 25 est solidaire d'un piston 27 déplaçable coaxialement à l'élément tubulaire 22 dans une partie cylindrique 28 ménagée du côté de l'extrémité de l'élément tubulaire opposée à son extrémité tronconique 24. Il est à noter que la canalisation 23 reliée à la source de dépression 13 par la canalisation 12 débouche entre l'extrémité ouverte 24 de l'élément tubulaire 22 et le piston 27 de déplacement de la soupape 26.

La chambre 29 ménagée entre le piston 27 et le fond 30 de l'élément tubulaire 22 est rendue étanche par des joints 31 montés, d'une part, entre le fond 30 et l'élément tubulaire 22 et, d'autre part entre le piston 27 et l'élément tubulaire 22. Le piston 27 constitue ainsi un vérin à simple effet pour assurer le déplacement de la tige 25.

Le fond 30 de l'élément tubulaire 22 présente un orifice d'air sous pression 32 permettant le raccordement à une source d'air sous pression (non représentée).

Sur la tige 25 est engagé un ressort hélicoïdal de rappel 33 prenant appui, d'une part sur le piston 27 et, d'autre part, sur une rondelle 34 présentant des ouvertures 35 pour le passage de fluide entre le moule 1 et le conduit de dépression 23.

Cette rondelle 34 joue, d'une part, le rôle de butée pour le ressort hélicoïdal 33 et également le rôle de palier de guidage pour la tige 25 du piston 27.

L'élément tubulaire comporte également près de son extrémité tronconique 24, une coupelle 36 dont le bord périphérique 37 s'étend vers cette extrémité. Une garniture d'étanchéité 38 est fixée, par exemple, par collage sur ce bord et destinée à venir s'appliquer contre la surface extérieure de la demi-coquille 1b, lorsque le bouchon est mis en place dans l'orifice de coulée 14. La coupelle 36 et la garniture 38 délimitent ainsi avec cette surface une chambre de dépression 39 qui par un tuyau 40 communique avec la canalisation 12.

Il est à noter que l'on vient de décrire un dispositif de moulage d'objets en mousse ne comportant qu'un seul moule. Selon une variante, par ailleurs classique, il est possible de prévoir un groupe de moules placés sur un caroussel par exemple et desservis au moment opportun par une même tête de coulée. Dans ce cas, le bouchon 16 est monté articulé sur le caroussel et non sur le bâti 17 qui porte la tête de coulée 15.

Le moulage des objets se déroule de la façon suivante.

Le moule vide 1 est fermé et verrouillé à l'aide de verrous 6, le bouchon 16 et la tête de coulée 15 sont écartés de l'orifice de coulée 14. La tête de coulée reçoit les composantes du précurseur de la matière synthétique formant ultérieurement la matière mousse. Un exemple de composition utilisable conduisant à une mousse en poly-uréthane est la suivante:

— Composante 1) un mélange de polyol, d'eau, d'additifs tels que des catalyseurs et des agents de stabilisation ainsi que d'un agent de réticulation.
— Composante 2) un mélange de 60% de diphényl méthane di-isocyanate et de 40% de toluène di-isocyanate.

Le précurseur étant convenablement mélangé dans la tête de coulée 15 et celle-ci étant placée dans l'orifice de coulée 14, une certaine quantité 41 de mélange moussant est coulée dans le moule et commence à réagir.

Immédiatement après, la tête de coulée 15 est écartée et le bouchon 16 est mis en place, ce qui obture le moule. Le conduit 23 est relié en permanence à la source de dépression (pompe 13) et il y règne un vide pouvant atteindre 13,33 à 93,31 kPa (100 à 700 mm Hg) ce qui correspond à une pression absolue de 87,98 à 7,99 kPa (660 à 60 mm Hg). Dès la mise en place du bouchon 16, une arrivée de fluide est commandée dans l'orifice 32 de sorte que le piston 27 descend et lève l'obturateur 26 de son siège. Le moule est donc mis sous vide à la même valeur que la canalisation 12.

La chambre 4 du moule est mise en dépression à travers à la fois le bouchon 16 et les évents 7a. Toutefois, le débit auquel le fluide est évacué du moule à travers le bouchon 16 est nettement supérieur à celui qui peut passer à travers les évents 7a qui ne pourraient à eux seuls assurer le moussage du mélange du début à la fin. Par conséquent, le mélange moussant 42 en réagissant et sous l'influence de la dépression créée tout d'abord à grand débit, croît en volume jusqu'à ce que son niveau supérieur atteigne le détecteur 21 qui doit être judicieusement placé de façon à ce que la soupape 26 se ferme avant que le mélange moussant puisse pénétrer dans le bouchon 16. Vu le faible volume d'air qui reste à évacuer, les évents 7a peuvent être de faible dimension. D'une façon générale, la hauteur du détecteur est donc déterminée cas par cas et elle peut être différente pour chaque moule.

Lorsque le mélange atteint le détecteur 21, celui-ci commande et provoque la suppression de la pression dans le chambre 29 et le piston 27 est rappelé par le ressort 33 dans sa position haute appliquant ainsi l'obturateur 26 sur son siège, ce qui achève la mise en dépression à travers le bouchon 16. Ensuite, l'expansion du mélange moussant se termine à l'aide des évents 7a qui font communiquer la chambre 4 avec la chambre 8 toujours en dépression. Celle-ci est maintenue après que la mousse ait occupée la totalité du volume du moule jusqu'à ce que le produit soit polymérisé. L'intervalle de temps de maintien de la dépression après fermeture de la soupape 24, 26 peut être de 2 à 5 minutes environ et est de préférence, d'à peu près 3 minutes.

Après la fin du moussage, le bouchon 16 reste en place pendant environ 2 à 5 minutes pour achever la polymérisation de la matière synthétique après quoi, la pression est de nouveau appliquée, de préférence à plusieurs reprises au-dessus du piston 27. Il en résulte une mise en dépression répétée de la chambre de moussage 4, ce qui brise au moins en partie les cellules de la mousse plastique et favorise en outre le démoulage de l'objet moulé. On notera que cette opération ne nécessite aucune manipulation de l'objet formé, l'application de la dépression étant toujours réalisée par le bouchon 16.

On remarquera également que selon une caractéristique avantageuse de l'invention, la présence d'une source à dépression est exploitée également pour assurer l'étanchéité au niveau du plan de joint du moule 1 et de l'orifice 14 obturé par le bouchon 16.

En effet, on a remarqué que la nervure 7 entre les demi-coquilles 1a et 1b n'assure pas à elle seule l'étanchéité à l'air. Par conséquent, lors de l'application d'une dépression à l'intérieur de la chambre 4, l'air ambiant pourrait pénétrer dans la chambre par l'intervalle entre cette nervure 7 et la face en regard de l'autre demi-coquille 1a. Cet air entrant dans le moule pourrait alors créer de grosses poches d'air dans la mousse encore liquide. L'aménagement de la chambre à dépression annulaire 8 qui à l'extérieur est bordée par la garniture d'étanchéité 9 permet donc de rendre le moule étanche vis-à-vis de l'extérieur si bien que la mousse en cours de formation n'a aucune tendance à présenter des défauts de surface. Le même résultat est obtenu au niveau du trou de coulée 14 grâce à la présence de la chambre annulaire 39 qui est ménagée autour du bouchon 16 et qui est maintenue en dépression par le conduit 40.

La température à laquelle le moulage s'effectue peut se situer entre 20 et 30° C, aucun chauffage n'étant nécessaire pour compenser la perte de chaleur due à l'évaporation d'un agent porogène.

La valeur de la dépression peut se situer entre 93,31 et 13,33 kPa environ selon que l'on désire obtenir une mousse à densité faible ou une mousse à densité plus élevée, respectivement.

Bien entendu, il est possible de disposer dans le moule une ossature destinée à renforcer l'objet en mousse comme il est bien connu dans la technique.

Par ailleurs, la canalisation à dépression aspire les gaz nocifs provenant éventuellement du mélange en cours de polymérisation, de sorte que par des filtres ou autres, l'on peut facilement éviter leur échappement à l'air libre.

**Revendications**

1. Dispositif de moulage d'objets en mousse plastique à partir d'un mélange de réaction liquide précurseur de la mousse à former, ce dispositif comportant au moins un moule (1) réalisé à partir de deux demi-coquilles (1a, 1b) assemblables selon un plan de joint pour délimiter une cavité de moussage (4), moule dans lequel est ménagé un trou de coulée (14) à travers lequel le mélange précurseur est introduit dans cette cavité, celle-ci étant raccordée sélectivement à une source de dépression (13) par l'intermédiaire d'un organe de réglage (24, 26), ce dispositif étant caractérisé en ce que le trou de coulée (14) est ménagé à la partie supérieure du moule (1) et peut être obturé par un bouchon amovible (16) comportant un passage qui est relié à ladite source à dépression (13) et qui peut communiquer avec ladite chambre de moussage (4) à travers une soupape commandée (24, 26) constituant ledit organe de réglage et en ce que des moyens de commande (21, 27, 32) sont prévus pour modifier la position de la soupape en fonction de l'avancement de l'expansion de la mousse à l'intérieur de ladite chambre de moussage (4).

2. Dispositif suivant la revendication 1, caractérisé en ce que ledit passage est délimité par un élément tubulaire (22) du bouchon d'obturation, l'extrémité ouverte de cet élément tubulaire formant le siège (24) de ladite soupape et en ce que ce siège coopère avec un obturateur (26) monté coulissant par rapport audit élément tubulaire dans le bouchon.

3. Dispositif suivant l'une quelconque des revendications 1 et 2, caractérisé en ce que lesdits moyens de commande comprennent un détecteur (21) relié à ladite soupape pour la commander et sensible à la présence auprès de lui de mousse et en ce que ce détecteur est placé dans la paroi verticale du moule à une hauteur prédéterminée.

4. Dispositif selon l'une quelconque des revendications 1 et 2, caractérisé en ce que ledit obturateur (26) est situé du côté extérieur de l'élément tubulaire (22) de manière à pouvoir être introduit dans le moule, et est monté à l'extrémité d'une tige (25) qui est logée axialement à l'intérieur de l'élément tubulaire (22) et dont l'autre extrémité est associée à des moyens de déplacement (27, 32).

5. Dispositif selon la revendication 4, caractérisé en ce que les moyens de déplacement de la tige (25) et de l'obturateur (26) sont constitués par un piston (27) déplaçable à l'intérieur d'une chambre cylindrique (29) ménagée dans l'élément tubulaire (22) à l'extrémité de celui-ci opposée à l'extrémité ouverte (24), une canalisation (23) reliée à la source de dépression (12, 13) débouchant entre l'extrémité ouverte (24) de l'élément tubulaire (22) et le piston (27) de déplacement de la soupape (24, 26).

6. Dispositif selon la revendication 5, caractérisé en ce que le piston (27) de déplacement de la soupape est un vérin à simple effet comportant un orifice (32) d'air sous pression dans ladite chambre et un ressort hélicoïdal de rappel (33), engagé sur la tige (25) et prenant appui, d'une part, sur le piston (27) et, d'autre part, sur un organe fixe (34) solidaire de l'élément tubulaire (22) et situé du côté de l'extrémité ouverte (24) de celui-ci.

7. Dispositif selon l'une quelconque des revendications 1 à 6, caractérisé en ce que des évents (7a) sont ménagés dans la partie supérieure du moule en étant en communication avec ladite source à dépression.

8. Dispositif selon l'une quelconque des revendications 1 à 7, caractérisé en ce qu'en outre au niveau du plan de joint des deux demi-coquilles (1a, 1b), il est prévu une nervure (7) faisant partie de l'une des demi-coquilles (1b) et dont la face est en contact avec l'autre demi-coquille (1a) de façon à conférer à la paroi intérieure du moule une quasi-continuité, en ce que chaque demi-coquille (1a, 1b) comporte une bride extérieure (5a, 5b) entre les périphéries extérieures desquelles est placée une garniture d'étanchéité (9) et en ce que lesdites brides délimitent autour de ladite nervure (7) une chambre annulaire (8) qui est raccordée à ladite source à dépression (12, 13).

9. Dispositif suivant les revendications 7 et 8 prises ensemble, caractérisé en ce que lesdits évents (7a) sont formés par des entailles prévues dans ladite nervures (7).

10. Dispositif suivant l'une quelconque des revendications 1 à 9, caractérisé en ce que ledit élément tubulaire (22) comporte en outre près de ladite extrémité ouverte (24) une coupelle (36) dont le bord libre (37) porte un joint (38) destinée à venir s'appliquer contre la paroi extérieure du moule (1) et en ce que dans la position d'obturation du bouchon (16), ladite coupelle délimite avec ledit joint et cette paroi, une chambre annulaire (39) qui est raccordée à ladite source de dépression (12, 13).

## Patentansprüche

1. Vorrichtung zum Formen von Gegenständen aus Kunststoffschaum ausgehend von einem flüssigen Reaktionsvorgemisch des zu formenden Kunststoffschaums,

— mit wenigstens einer Form aus zwei Halbschalen, die längs einer Teilungsebene zusammenbaubar sind und eine Schäumkammer bilden,
— wobei in der Form ein Gießloch ausgebildet ist, durch welches das Reaktionsvorgemisch in die Schäumkammer eingeführt wird, die über ein Regelorgan wahlweise mit einer Druckquelle verbindbar ist,

dadurch gekennzeichnet,

— daß das Gießloch (14) am Oberteil der Form ausgebildet und durch einen abnehmbaren Stopfen (16) mit einem Kanal verschließbar ist, der mit der Unterdruckquelle (12, 13) verbunden ist und mit der Schäumkammer (4) über ein steuerbares Ventil (24, 26) in Verbindung steht, das das Regelorgan bildet, und
— daß eine Steuereinrichtung (21, 27, 32) die Stellung des Ventils (24, 26) in Abhängigkeit vom Fortschreiten der Schaumexpansion in der Schäumkammer (4) abändert.

2. Vorrichtung nach Anspruch 1, dadurch gekennzeichnet,

— daß der Kanal durch ein rohrförmiges Element (22) des Stopfens (16) begrenzt ist,
— daß das offene Ende des rohrförmigen Elementes (22) den Sitz (24) des Ventils (24, 26) bildet und
— daß der Sitz (24) mit einem Verschlußglied (26) zusammenarbeitet, das im Stopfen (16) gegenüber dem rohrförmigen Element verschiebbar gelagert ist.

3. Vorrichtung nach Anspruch 1 oder 2, dadurch gekennzeichnet,

— daß die Steuereinrichtung (21, 27, 32) einen Fühler (21) aufweist, der mit dem Ventil (24, 26) verbunden ist, es steuert und auf die Anwesenheit von in seiner Nähe befindlichem Schaum anspricht, und
— daß der Fühler (21) in gegebener Höhe in der senkrechten Wand der Form (1) angeordnet ist.

4. Vorrichtung nach Anspruch 1 oder 2, dadurch gekennzeichnet,

— daß das Verschlußglied (24) außerhalb des rohrförmigen Elements (22) derart angeordnet ist, daß es in die Form (1) eingeführt werden kann, und
— daß das Verschlußglied (26) am Ende einer Stange (25) befestigt ist, die axial innerhalb des rohrförmigen Elements (22) angeordnet ist und deren anderes Ende mit einer Verschiebungseinrichtung (27, 32) verbunden ist.

5. Vorrichtung nach Anspruch 4, dadurch gekennzeichnet,

— daß die Verschiebungseinrichtung (27, 32) für die Stange (25) und das Verschlußglied (26) aus einem Kolben (27) besteht, der in einer zylindrischen Kammer (29) verschiebbar ist, die im rohrförmigen Element (22) an dessen dem offenen Ende (24) des rohrförmigen Elements (22) entgegengesetzten Ende ausgebildet ist, und
— daß eine mit der Unterdruckquelle (12, 13) verbundene Leitung (23) zwischen dem offenen Ende (24) und dem Kolben (27) mündet.

6. Vorrichtung nach Anspruch 5, dadurch gekennzeichnet,

— daß der Kolben (27) einen einfach wirkenden Servomotor bildet, der eine in die Kammer (29) mündende Druckluftöffnung (32) und eine schraubenförmige Rückstellfeder (33) aufweist, die auf der Stange (25) sitzt und am Kolben (27) sowie an einem feststehenden Organ (34) anliegt, das mit dem rohrförmigen Element (22) fest verbunden ist und sich auf der Seite von dessen offenem Ende (24) befindet.

7. Vorrichtung nach einem der Ansprüche 1 bis 6, dadurch gekennzeichnet,

— daß im Oberteil der Form (1) mit der Unterdruckquelle (12, 13) in Verbindung stehende Entlüftungsöffnungen (7a) ausgebildet sind.

8. Vorrichtung nach einem der Ansprüche 1 bis 7, dadurch gekennzeichnet,

— daß in Höhe der Teilungsebene (3) der beiden Halbschalen (1a, 1b) eine Rippe (7) ausgebildet ist, die Bestandteil einer (1b) der Halbschalen (1a, 1b) ist und deren Stirnfläche mit der anderen Halbschale (1a) derart in Berührung steht, daß sie der Innenwand der Form (1) einen praktisch kontinuierlichen Verlauf gibt, und
— daß jede Halbschale (1a, 1b) einen außenliegenden Flansch (5a; 5b) aufweist,
— daß zwischen den Außenumfangsbereichen der Flansche (5a, 5b) eine Dichtung (9) angeordnet ist und
— daß die Flansche (5a, 5b) um die Rippe (7) eine mit der Unterdruckquelle (12, 13) verbundene ringförmige Kammer (8) bilden.

9. Vorrichtung nach Anspruch 7 und 8, dadurch gekennzeichnet,

— daß die Entlüftungsöffnungen (7a) durch Einschnitte in den Rippen (7) gebildet sind.

10. Vorrichtung nach einem der Ansprüche 1 bis 9, dadurch gekennzeichnet,

— daß das rohrförmige Element (22) in der Nähe seines offenen Endes (24) eine Schale (36) aufweist, deren freier Rand (37) eine Dichtung (38) aufweist zur Anlage an der Außenwand der Form (1), und
— daß in Schließstellung des Stopfens (16) die Schale (36) zusammen mit der Dichtung (38) und der Außenwand eine mit der Unterdruckquelle (12, 13) verbundene ringförmige Kammer (39) bildet.

**Claims**

1. Device for moulding objects of plastic foam from a liquid reaction mixture which is the precursor of the foam to be formed, this device comprising at least a mould (1) formed by two half-shells (1a, 1d) capable of being assembled on a joint plane so as to define a foaming cavity (4), in which mould there is provided a pouring aperture (14) through which the precursor mixture is introduced into this cavity, the latter being selectively connected to a source of depression (13) through regulating means (24, 26), this device being characterized in that the pouring aperture (14) is provided in the upper part of the mould (1) and may be obturated by a removable plug (16) having a passage which is connected to said source of depression (13) and which may communicate with said foaming chamber (4) through a controlled valve (24, 26) constituting said regulating means and control means (21, 27, 32) are provided for modifying the position of the valve as a function of the progress of the expansion of the foam inside said foaming chamber (4).

2. Device according to claim 1, characterized in that said passage is defined by a tubular element (22) of the obturating plug, the open end of this tubular element forming the seat (24) of said valve and this seat cooperates with a closure member (26) which is slidably mounted relative to said tubular element in the plug.

3. A device according to claim 1 or 2, characterized in that said control means comprise a detector (21) connected to said valve for controlling it and responsive to the presence of foam adjacent thereto and this detector is placed in the vertical wall of the mould at a predetermined height.

4. A device according to claim 1 or 2, characterized in that said closure member (26) is located on the outside of the tubular element (22) so as to be capable of being introduced into the mould, and is mounted at the end of a rod (25) which is disposed axially inside the tubular element (22) and whose other end is associated with shifting means (27, 32).

5. Device according to claim 4, characterized in that the shifting means of the rod (25) and the closure member (26) are constituted by a piston (27) which is movable inside a cylindrical chamber (29) formed in the tubular element (22) at the end of the latter opposed to the open end (24), a pipe (23) connected to the source of depression (12, 13) opening out between the open end (24) of the tubular element (22) and the piston (27) for shifting the valve (24, 26).

6. Device according to claim 5, characterized in that the piston (27) for shifting the valve is a single-acting ram having an orifice (32) for air under pressure in said chamber and a return coil spring (33) engaged on the rod (25) and bearing against on one hand, the piston (27) and, on the other hand, a fixed element (34) rigid with the tubular element (22) and located on the open end (24) side of the tubular element.

7. Device according to any one of the claims 1 to 6, characterized in that vents (7a) are provided in the upper part of the mould and are in communication with said source of depression.

8. Device according to any one of the claims 1 to 7, characterized in that there is further provided, in the region of the joint plane of the two half-shells (1a, 1d), a rib (7) which is part of one of the half-shells (1b) and whose surface is in contact with the other half-shell (1a) so as to impart practically a continuity to the inner wall of the mould, each half-shell (1a, 1b) has an outer flange (5a, 5b) between the outer peripheries of which is placed a sealing element (9) and said flanges define around said rib (7) an annular chamber (8) connected to said source of depression (12, 13).

9. A device according to claims 7 and 8 taken together, characterized in that said vents (7a) are formed by recesses provided in said rib (7).

10. A device according to any one of the claims 1 to 9, characterized in that said tubular element (22) further comprises, near to said open end (24), a cup (36) whose free edge (37) carries a sealing element (38) adapted to be applied against the outer wall of the mould (1), and, in the position for closing the plug (16), said cup defines with said sealing element and said wall an annular chamber (39) which is connected to said source of depression (12, 13).

FIG_1

# FIG_2

FIG.3